(19) Europäisches Patentamt
European Patent Office
Office européen des brevets

(11) **EP 2 009 892 B1**

(12) **FASCICULE DE BREVET EUROPEEN**

(45) Date de publication et mention
de la délivrance du brevet:
**06.03.2019  Bulletin 2019/10**

(51) Int Cl.:
***H04M 3/56*** (2006.01)    ***H04M 7/00*** (2006.01)

(21) Numéro de dépôt: **08159131.5**

(22) Date de dépôt: **26.06.2008**

(54) **Positionnement de locuteurs en conférence audio 3D**

Positionierung der Sprecher in einer 3D-Audiokonferenz

Positioning of speakers in a 3-D audio conference

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **29.06.2007  FR 0704712**

(43) Date de publication de la demande:
**31.12.2008  Bulletin 2009/01**

(73) Titulaire: **Orange**
**75015 Paris (FR)**

(72) Inventeurs:
• **Pallone, Grégory**
**22660 Trélévern (FR)**
• **Nagle, Arnault**
**22300 Lannion (FR)**

(74) Mandataire: **Cabinet Plasseraud**
**66, rue de la Chaussée d'Antin**
**75440 Paris Cedex 09 (FR)**

(56) Documents cités:
**EP-A- 1 515 570         WO-A-2007/006856**
**US-A1- 2007 071 204**

**Description**

L'invention se rapporte au domaine des conférences audio spatialisées.

Une conférence audio consiste à mettre en relation des personnes grâce à leur terminal audio. Les flux audio peuvent par exemple être conformes au protocole TCP/IP, auquel cas on parlera de voix sur réseau IP (« Voice over IP » en anglais). L'invention n'est bien entendu pas limitée à un réseau particulier. Par exemple, la conférence audio peut être mise en oeuvre avec un réseau numérique à intégration de services (RNIS).

Des terminaux en conférence peuvent par exemple communiquer selon un mode centralisé, grâce à un pont de conférence MCU (de l'anglais « Multipoint Control Unit ») qui centralise les flux audio avant de les mixer et les répartir de manière adéquate. Les terminaux peuvent alternativement communiquer en adoptant un mode « multicast », dans lequel chaque flux audio est caractérisé par une adresse source et par une adresse de groupe, ou bien en adoptant un mode distribué utilisant de multiples liaisons point à point. De manière générale, l'invention n'est pas limitée par l'architecture mise en oeuvre.

Il est connu, pour un conférencier donné, dit auditeur dans ce contexte, de spatialiser virtuellement les voix des autres conférenciers, dits locuteurs, dans un espace virtuel audio 3D afin de recréer les sensations ressenties lors d'une conversation réelle. L'auditeur a ainsi l'impression que la voix de chaque locuteur provient d'une position particulière de l'espace. La spatialisation des voix contribue à améliorer l'intelligibilité, le confort d'écoute, la compréhension et la reconnaissance des locuteurs.

Suivant l'architecture adoptée, la spatialisation peut avoir lieu soit sur un pont, en particulier en mode centralisé, soit sur le terminal en particulier en modes multicast et distribués.

L'article de Mark Chignell, Ryan Kilgore et Paul Smith, « Spatialized Audioconferencing : What are the Benefits ? », conférence de 2003 du Centre for Advanced Studies on Collaborative Research, décrit une application pour faire de la conférence audio spatialisée sur des réseaux IP permettant aux conférenciers de positionner virtuellement à leur convenance les différents locuteurs. Il est nécessaire de prévoir une interface de positionnement pour chaque conférencier. En outre les conférenciers doivent effectuer des manipulations pour positionner les différents locuteurs.

On connaît en outre dans WO.07/006856 et EP-1515570 des procédés de positionnement de locuteurs, mais qui impliquent un choix manuel, ou encore aléatoire, du positionnement.

L'invention vise à remédier à ces inconvénients.

Selon un premier aspect, l'invention a pour objet un procédé mis en oeuvre par des ressources informatiques, de conférence audio entre des conférenciers via leur terminal respectif, les conférenciers incluant au moins un auditeur et au moins un locuteur, le procédé comprenant, pour au moins cet auditeur et pour au moins ce locuteur, les étapes consistant à estimer, en fonction d'un signal numérique reçu d'un terminal du locuteur, au moins une caractéristique propre à ce locuteur, et déterminer une consigne de positionnement du locuteur dans un espace virtuel de l'auditeur à partir cette au moins une caractéristique estimée.

La consigne est déterminée par des ressources informatiques, à partir d'une caractéristique propre au locuteur estimée à partir du signal numérique correspondant à ce locuteur. L'invention permet ainsi de placer automatiquement les locuteurs de manière optimale dans l'espace 3D, et ce quel que soit le nombre de locuteurs.

Il est connu de l'art antérieur d'effectuer un positionnement aléatoire des locuteurs dans l'espace 3D. Avec le procédé selon un aspect de l'invention, une ou plusieurs caractéristiques du signal numérique issu du terminal du locuteur sont prises en comptes pour déterminer la consigne, ce qui permet un positionnement plus pertinent qu'un simple positionnement aléatoire.

Par ailleurs, le procédé selon un aspect de l'invention permet d'éviter les manipulations liées à un positionnement manuel tel que celui décrit dans l'article de M.Chignell.

En outre, il n'est plus nécessaire de prévoir une interface pour chaque terminal.

On notera également que dans l'art antérieur, pour un utilisateur positionnant lui-même les locuteurs, un positionnement optimal peut s'avérer difficile au-delà de quelques participants. Le procédé selon un aspect de l'invention permet de garantir un positionnement optimal quelque soit le nombre de locuteurs.

Le signal numérique peut par exemple comprendre au moins un champ d'en-tête et/ou un signal numérique audio de parole.

La caractéristique propre au locuteur peut être estimée par exemple à partir de l'éventuel champ d'en-tête du signal numérique, spécifiant par exemple le nom ou la société du locuteur, et/ou à partir de l'éventuel signal audio de parole, par exemple en estimant certaines caractéristiques de la voix du locuteur. La présence d'un champ d'en-tête ou d'un signal audio de parole au sein du signal numérique n'entraîne pas systématiquement une estimation de la caractéristique propre au locuteur à partir du champ d'entête ou du signal audio de parole respectivement.

Les étapes d'estimation de la caractéristique du locuteur et de détermination de la consigne, dites étapes de positionnement, peuvent être effectuées pour tous les autres conférenciers. Bien entendu, on peut prévoir de déterminer une consigne de positionnement pour seulement une partie des autres conférenciers, et un positionnement manuel ou un son mono pour les conférenciers restants.

Avantageusement, dans le cas où il existe plusieurs locuteurs, les étapes de positionnement sont effectuées pour au moins deux locuteurs. Pour chacun de ces au moins deux locuteurs, l'étape de détermination de la consigne de ce locuteur est effectuée en outre à partir d'au moins une caractéristique précédemment estimée pour au moins un autre locuteur parmi ces au moins deux locuteurs.

Dit autrement, lors du positionnement d'un locuteur, on prend en compte les caractéristiques estimées pour les autres locuteurs. On peut ainsi optimiser le positionnement dans l'espace virtuel.

L'invention n'est en rien limitée par ce mode de réalisation, même lorsqu'il existe plusieurs locuteurs. On peut par exemple prévoir de déterminer, pour chaque locuteur, la consigne de positionnement à partir des caractéristiques estimées pour ce locuteur seulement, puis éventuellement de modifier la consigne en fonction des consignes déterminées pour les autres locuteurs.

Le procédé objet de l'invention peut bien entendu être mis en oeuvre même si on ne compte qu'un seul locuteur. Par exemple, le signal audio de parole de ce locuteur est analysé pour estimer une puissance vocale, et le locuteur est virtuellement positionné à une source virtuelle plus ou moins distante de l'auditeur selon la puissance de sa voix.

Avantageusement, le procédé comprend en outre une étape de spatialisation du locuteur en utilisant la consigne de positionnement pour ce locuteur. L'étape de détermination de la consigne et l'étape de spatialisation peuvent être effectuée sur le même dispositif, ou sur des dispositifs distincts, et éventuellement distants.

Il est bien évident que les conférenciers peuvent être à la fois auditeurs et locuteurs, selon le conférencier (dit « auditeur » dans ce contexte) pour lequel on spatialise virtuellement tout ou partie des autres conférenciers (dits « locuteurs » dans ce contexte). Les étapes de positionnement et de spatialisation de tout ou partie des autres conférenciers peuvent être effectuées pour chacun des conférenciers, c'est-à-dire que chaque conférencier est auditeur, ou pour seulement une partie des conférenciers, par exemple ceux qui ont souscrit un abonnement pour ce service de spatialisation, ou qui possèdent un terminal adéquat.

L'invention peut être mise en oeuvre quelle que soit l'architecture adoptée. Par exemple, dans le cas d'une architecture centralisée, l'invention peut être mise en oeuvre par un pont recevant des signaux issus de terminaux. Dans l'art antérieur, la possibilité laissée à un auditeur de pouvoir placer virtuellement les locuteurs à sa convenance implique un dialogue entre le pont et le terminal de cet auditeur. Une décision d'un utilisateur sur un terminal concernant la position virtuelle d'un de ses locuteurs entraine un traitement de spatialisation effectué sur le pont. L'invention permet d'éviter une telle complexification des dialogues entre le pont et les terminaux dans le cas d'une architecture centralisée, et d'éviter une modification des protocoles de signalisation liée à cette complexification.

Dans le cas d'une architecture distribuée, les étapes selon l'invention conduisant à la spatialisation pour un auditeur donné peuvent par exemple être effectuées par le terminal de cet auditeur.

L'étape de spatialisation peut par exemple être basée sur l'ITD (« Interaural Time Différence » en anglais) et l'ILD (« Interaural Level Différence » en anglais), ou bien sur les HRTF (« Head Related Transfer Fonction » en anglais). L'invention n'est bien entendu pas limitée par la méthode de spatialisation mise en oeuvre.

L'invention n'est pas limitée par la caractéristique propre au locuteur estimée en vue de la détermination de la consigne de positionnement de ce locuteur. On appelle « caractéristique propre au locuteur » aussi bien des caractéristiques propres à la personne du locuteur que des caractéristiques propres au terminal utilisé par le locuteur.

Ainsi, par exemple, le nom de la société à laquelle appartient le locuteur, le nom du locuteur, la position géographique du locuteur, ou l'importance hiérarchique du locuteur, peuvent constituer des caractéristiques du locuteur. Les exemples de caractéristiques ci-dessus peuvent être obtenus directement du terminal, par exemple lors d'une phase initiale d'interrogation du locuteur. On peut par exemple prévoir une transmission de ces caractéristiques via le protocole SIP (« Session Initiation Protocol » en anglais), défini dans la spécification IETF RFC3261.

Par exemple, dans le cadre d'une architecture centralisée, des informations de noms des différents conférenciers peuvent remonter jusqu'à un pont. Les conférenciers sont classés par ordre alphabétique, et pour chaque auditeur, les locuteurs sont positionnés dans l'espace virtuel sur par exemple une rangée, de sorte que l'ordre au sein de la rangée soit l'ordre alphabétique. Le pont effectue ensuite les traitements de spatialisation pour que chaque auditeur perçoive la voix de chaque locuteur comme provenant d'une source virtuelle placée à la position ainsi déterminée.

Le signal numérique issu d'un terminal peut ainsi comprendre, par exemple dans un champ d'en-tête, la ou les caractéristiques propres au locuteur correspondant, comme par exemple le nom de la société du locuteur, et à partir de laquelle ou desquelles la consigne est déterminée.

Avantageusement, le signal numérique issu du terminal comprend un signal audio de parole du locuteur et l'étape d'estimation de la caractéristique propre au locuteur en fonction du signal reçu comprend une étape d'estimation d'une caractéristique de la voix du locuteur en fonction de ce signal audio de parole.

Par exemple, la voix du locuteur peut être analysée à des fins de reconnaissance du locuteur parmi un répertoire de locuteurs. Une fois le locuteur reconnu, par exemple à l'aide de coefficients cepstraux, il peut alors être positionné en utilisant une autre caractéristique du locuteur reconnu, par exemple son nom. Par exemple, les locuteurs sont positionnés en tenant compte de l'ordre alphabétique. La consigne est donc déterminée indirectement à partir des coefficients cepstraux.

La caractéristique de la voix du locuteur peut être utilisée directement lors de la détermination de la consigne. La caractéristique de la voix du locuteur peut par exemple comprendre la puissance de la voix du locuteur. On peut prévoir dans ce cas de positionner les locuteurs dont la voix est relativement forte à un endroit virtuel relativement éloigné de l'auditeur.

La caractéristique de la voix du locuteur peut comprendre l'occurrence vocale : par exemple un locuteur qui parle souvent est placé virtuellement sensiblement face à l'auditeur, tandis qu'un locuteur moins loquace est placé virtuellement sur les cotés de l'auditeur.

Par exemple, dans le cas où le nombre de participants à la conférence atteint ou dépasse trois, on peut chercher à estimer les distances, au sens euclidien du terme, entre les différentes voix des locuteurs. On peut ainsi prévoir de positionner virtuellement les locuteurs dont les voix sont relativement proches à des positions relativement éloignées l'une de l'autre.

Plus généralement, on peut estimer des distances entre locuteurs à partir des caractéristiques propres à ces locuteurs, vocales ou non.

Les distances peuvent par exemple être estimées sur la base de comparaisons entre des ensembles d'un moins un coefficient chacun, cet au moins un coefficient étant obtenu par analyse du signal audio de parole d'un locuteur (on parle de comparaisons entre composantes fréquentielles des voix des locuteurs). Dit autrement, la caractéristique de la voix du locuteur utilisée pour déterminer la consigne comprend alors des composantes fréquentielles de la voix de ce locuteur.

L'invention n'est bien entendu pas limitée par un quelconque mode de calcul des distances entre les voix. Par exemple, les distances peuvent être estimées sur la base de comparaisons de coefficients cepstraux.

L'invention n'est pas non plus limitée par la façon dont est mise en place la conférence. Par exemple, on peut prévoir que tous les conférenciers commencent à participer à la conférence sensiblement au même moment, par exemple suite à une proposition de l'un des conférenciers. Dans ce cas, les déterminations de consignes peuvent être effectuées une seule fois, au début de la conférence.

On peut prévoir de laisser la possibilité en cours de conférence aux conférenciers de quitter la conférence ou de s'inviter à la conférence. Dans ce cas, on peut prévoir d'effectuer l'étape de détermination de consigne lors de l'arrivée d'un nouveau conférencier, et éventuellement lors du départ d'un conférencier. Les arrivées et les départs de locuteurs sont ainsi pris en compte.

Par exemple, suite à l'arrivée d'un nouveau locuteur, on effectue l'étape de détermination de consigne pour chacun des locuteurs, et en prenant en compte les caractéristiques des autres locuteurs, ce qui permet ainsi un positionnement optimal des locuteurs.

On peut alternativement prévoir d'effectuer l'étape de détermination de consigne seulement pour le nouveau locuteur (et en prenant éventuellement en compte les caractéristiques des autres locuteurs), afin de ne pas perturber l'auditeur habitué au positionnement précédent des locuteurs. Les positions virtuelles des locuteurs déjà positionnés peuvent rester inchangées, ou bien être modifiées légèrement afin de prendre en compte le positionnement du nouveau locuteur.

Selon un autre aspect, l'invention a pour objet un dispositif destiné à être utilisé dans le cadre d'une conférence audio entre des conférenciers via leurs terminaux respectifs. Les conférenciers comprennent au moins un locuteur et au moins un auditeur, une entrée pour recevoir des signaux issus d'un terminal du locuteur, des moyens de traitement pour estimer, en fonction du signal reçu au moins une caractéristique propre au locuteur, et déterminer à partir de cette au moins une caractéristique estimée une consigne de positionnement du locuteur dans un espace virtuel de l'auditeur. Le dispositif comprend en outre une sortie pour délivrer la consigne, par exemple à un pont spatialiseur éventuellement distant, ou encore à des moyens de spatialisation, éventuellement intégrés dans un même processeur que les moyens de traitement.

Par exemple, dans le cas d'une architecture centralisée, ce dispositif peut être intégré dans un pont, ou comprendre le pont. Dans le cas d'une architecture distribuée ou multicast, ce dispositif peut être intégré dans (ou comprendre) un terminal. Les signaux issus du terminal peuvent être reçus directement du terminal, ou bien indirectement. Ces signaux peuvent par exemple avoir transité par un pont répliquant.

Le dispositif selon cet aspect de l'invention peut en outre comprendre des moyens de spatialisation pour traiter les flux correspondant à chaque locuteur à des fins de spatialisation. On peut aussi prévoir des moyens de spatialisation séparés, et éventuellement distant, du dispositif selon cet aspect de l'invention.

Selon un autre aspect, l'invention a pour objet un système pour une conférence audio entre des conférenciers via leur terminaux respectifs, et comprenant le dispositif selon un aspect de l'invention et ces terminaux (ou un pont le cas échéant).

Selon un autre aspect, l'invention a pour objet un programme d'ordinateur destiné à être stocké dans une mémoire d'un dispositif destiné à être utilisé dans le cadre d'une conférence audio entre des conférenciers via leur terminaux respectifs, et/ou stocké sur un support mémoire destiné à coopérer avec un lecteur dudit dispositif et/ou téléchargé via un réseau de télécommunication. Les conférenciers incluent au moins un locuteur et au moins un auditeur.

Le programme comprenant des instructions pour exécuter, pour au moins l'auditeur, et pour au moins le locuteur les étapes du procédé selon un aspect de l'invention.

D'autres particularités et avantages de la présente invention apparaîtront dans la description ci-après. La portée de l'invention est définie par les revendications annexées.

La figure 1 montre un exemple de système selon un mode de réalisation de l'invention.

La figure 2 montre un exemple de système selon un autre mode de réalisation de l'invention.

La figure 3 montre un exemple de système selon encore un autre mode de réalisation de l'invention.

La figure 4 est un algorithme d'un exemple de procédé selon un mode de réalisation de l'invention.

La figure 5A illustre schématiquement un exemple de configuration de base des locuteurs dans l'espace virtuel.

Les figures 5B, 5C et 5D illustrent schématiquement des exemples de configuration des locuteurs dans l'espace virtuel en modes dynamique, statique, et position figée respectivement.

La figure 6 montre de façon plus détaillée un exemple de système selon un mode de réalisation de l'invention.

La figure 7 est un exemple d'algorithme destiné à être exécuté par un pont selon un mode de réalisation de l'invention.

La figure 8 est un exemple d'algorithme destiné à être exécuté par un terminal dans un système selon un mode de réalisation de l'invention.

Sur les différentes figures, des objets identiques ou similaires peuvent être désignés par les mêmes numéros de référence.

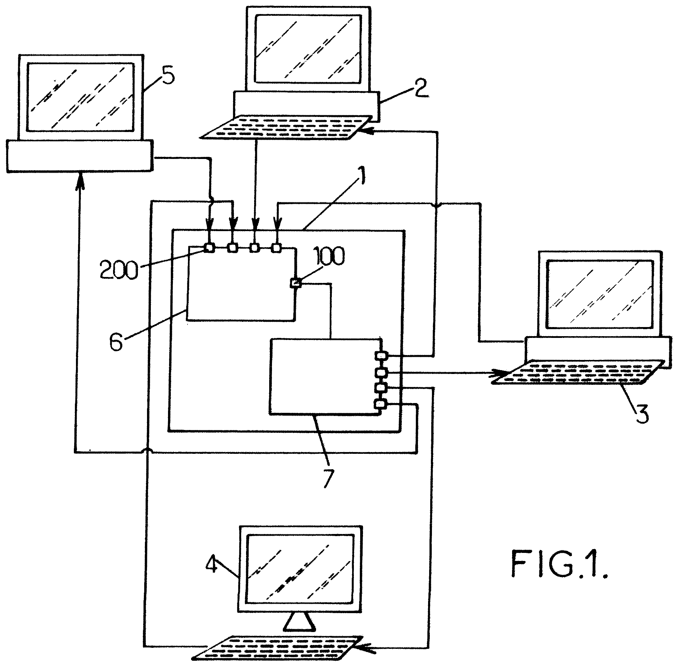

La figure 1 montre un exemple de système distribué comprenant des terminaux 2, 3, 4, 5 communiquant via un pont MCU 1. Les utilisateurs (non représentés) de ces terminaux peuvent participer à des conférences audio. Lors d'une conférence audio, les flux audio, représentés par des flèches simples indiquant leur sens, sont reçus par le pont MCU 1 depuis les terminaux et redistribués de façon à ce que chaque terminal reçoive un flux résultant du mixage des flux émis par les autres terminaux.

Egalement, le pont 1 comprend des moyens de spatialisation, par exemple un processeur 7 de type DSP (« Digital Signal Processor » en anglais) dédié au traitement des flux audio. Pour un terminal émetteur donné et un terminal destinataire donné, le DSP 7 traite le flux de ce terminal émetteur de façon à ce que l'utilisateur de ce terminal destinataire perçoive le son correspondant à ce flux comme ayant été émis par une source virtuelle à une position donnée.

Le pont MCU comprend en outre des moyens de traitement 6, également appelés moyens de positionnement. Ces moyens 6 peuvent par exemple comprendre un autre processeur 6 de traitement du signal du type DSP. Les processeurs 6, 7 peuvent alternativement être confondus.

Pour chaque terminal destinataire, c'est-à-dire pour chaque utilisateur dit auditeur dans ce contexte, le processeur 6 permet de déterminer les positions virtuelles des autres utilisateurs, dits locuteurs dans ce contexte. Pour chaque locuteur d'un auditeur donné, c'est-à-dire pour les terminaux autres que le terminal destinataire, le processeur 6 effectue ce positionnement automatiquement, à partir d'une ou plusieurs caractéristiques de ce locuteur.

Le processeur 6 comprend à cet effet des entrées 200 pour recevoir les signaux issus des terminaux 2, 3, 4, 5, et une sortie 100 pour délivrer des consignes de positionnement au processeur 7.

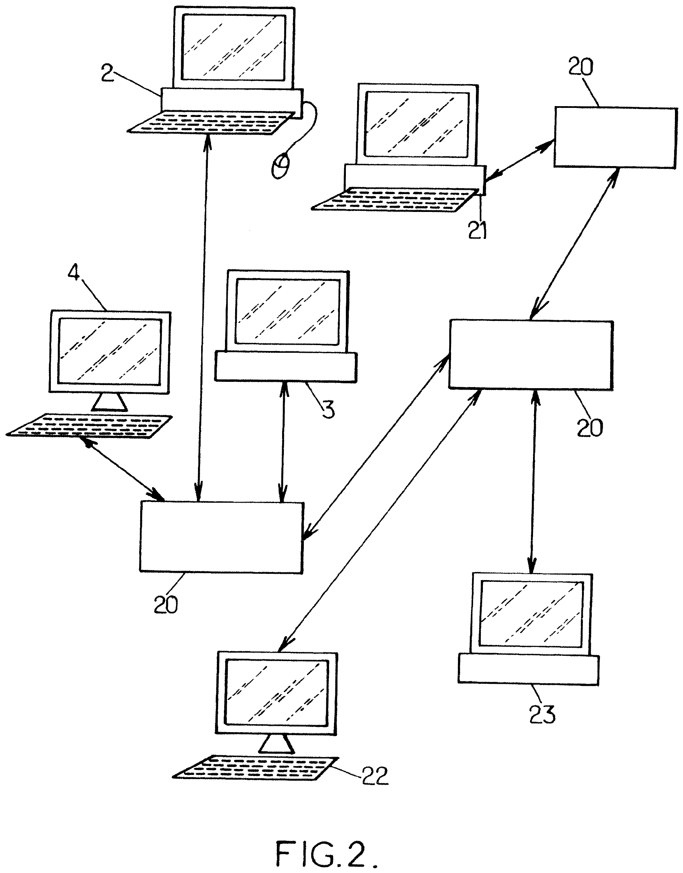

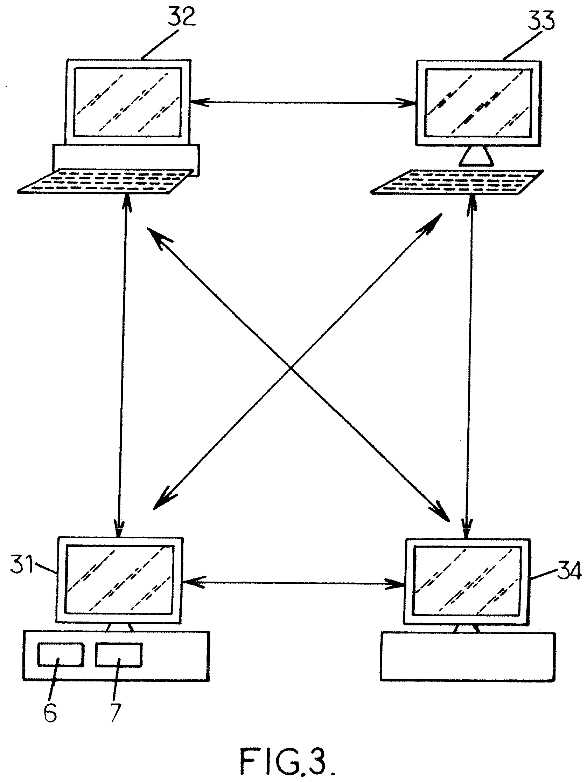

La figure 2 montre un exemple de système avec une architecture Multicast. Les flux audio émis ou reçus par les terminaux 2, 3, 4, 21, 22, 23 transitent par des routeurs 20. Dans cet exemple, chacun des terminaux 2, 3, 4, 21, 22 et 23 comprennent les moyens de positionnement et les moyens de spatialisation (non représentés). La figure 3 montre un exemple de système avec une architecture distribuée. Les terminaux 32, 33, 34, 35 communiquent directement les uns avec les autres et intègrent les moyens 6, 7. On peut alternativement prévoir des dispositifs (non représentés) dédiés au positionnement et à la spatialisation à l'entrée de chaque terminal.

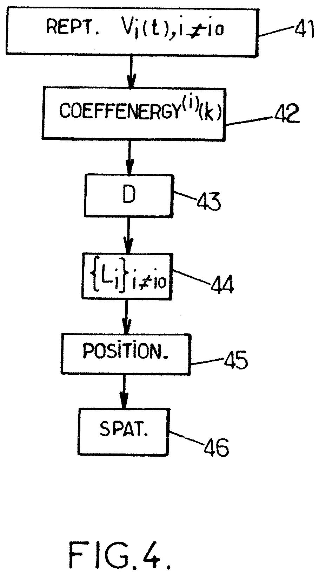

La figure 4 montre un algorithme d'un exemple de procédé selon un mode de réalisation de l'invention. Pour un auditeur donné indicé $i_0$, cet algorithme permet de spatialiser les voix des autres conférenciers dits locuteurs. Les locuteurs sont indicés par l'indice i.

Dans ce mode de réalisation, les locuteurs sont positionnés en prenant en compte un critère de maximisation des distances vocales entre les voix des différents locuteurs de la conférence.

Le positionnement automatique des voix dans l'espace virtuel audio 3D est effectué en établissant une matrice des distances entre les voix, en positionnant les voix de manière optimale en utilisant le critère de maximisation des distances.

Dans un premier temps, les voix des locuteurs sont enregistrées (étape 41), par exemple lors d'une phase d'initialisation, ou bien tout simplement en début de conférence. Chaque signal vocal $V_i(t)$ est ensuite analysé afin d'estimer une caractéristique coeffEnergy$^{(i)}{}_{(k)}$ de la voix (étape 42).

Plus précisément, on peut utiliser un banc de K filtres TimeFilters$_{(k)}$, où K vaut par exemple 24. La largeur de bande fréquentielle de chaque filtre peut se calquer sur l'échelle de Bark afin de s'approcher au mieux de la perception de l'oreille. On pourra se rapporter à la publication de H.Fletcher, « Auditory Patterns », Review of Modem Physics, 12, pages 47-65, janvier 1940. On passe des fréquences Freqscale d'une échelle linéaire à des fréquences Freq2bark sur une échelle de Bark grâce à la relation suivante :

$$Freq2bark = \frac{26{,}81}{1 + \dfrac{1960}{Freqscale}} - 0{,}53$$

La largeur des filtres est ainsi relativement constante à basse fréquences et proportionnelle à la fréquence aux hautes fréquences. Les fréquences de coupure des filtres peuvent par exemple prendre les valeurs suivantes (en Hz) : 20, 122, 212, 309, 416, 534, 663, 807, 968, 1148, 1353, 1585, 1853, 2166, 2533, 2972, 3506, 4170, 5018, 6139, 7687, 9968, 13662, 19996.

Pour chaque locuteur, on calcule, sur une portion du signal vocal échantillonné $V_i(n)$ les sous-bandes fréquentielles $subband^{(i)}_{(k)}$ en filtrant le signal par les réponses impulsionnelles correspondant aux filtres $TimeFilters_{(k)}$ :

$$subband^{(i)}_{(k)}(n) = (V_i * TimeFilter_{(k)})(n)$$

Où $*$ désigne le produit de convolution, et n indice les échantillons temporels.

Pour chacun des signaux en sous-bande $subband^{(i)}_{(k)}$, on applique une fenêtre win, de type Hanning par exemple, centrée en 0. Puis on calcule l'énergie de ce signal fenêtré. L'opération est réitérée en déplaçant la fenêtre win de 0,004 s par exemple, et ce jusqu'à épuiser la portion temporelle de signal vocal filtré. On peut ainsi calculer une énergie à court terme $STE_{h,k}^{(i)}$ : $STE_{h,k}^{(i)} = \sum_n (subband^{(i)}_{(k)}(n) \times win(n-h))^2$ , où h correspond à une durée de 0,004 s par exemple.

Afin d'obtenir un coefficient énergétique $coeffEnergy^{(i)}_{(k)}$ par sous-bande et par locuteur, l'énergie à court terme $STE_{h,k}^{(i)}$ peut ensuite être moyennée sur h et normalisée par l'énergie totale, c'est-à-dire l'énergie de la portion vocale pour ce locuteur et pour toutes les bandes, afin de pouvoir être comparées à des coefficients énergétiques d'autres locuteurs :

$$coeffEnergy^{(i)}_{(k)} = \frac{\overline{STE_{h,k}^{(i)}}}{\sum_n (V_i(n))^2}$$

Les distances entre les voix des locuteurs sont estimées lors d'une étape 43, sur la base de comparaisons des caractéristiques $coeffEnergy^{(i)}_{(k)}$ ;

$$D(i,i') = \sqrt{\sum_{k=1}^{K} (coeffEnergy^{(i)}_{(k)} - coeffEnergy^{(i')}_{(k)})^2}$$

Les valeurs des distances $D(i, i')$ entre locuteurs i, i' permet d'obtenir une matrice D avec des valeurs nulles sur la diagonale.

Plus la valeur de $D(i, i')$ est élevée, plus les voix des locuteurs i, i' sont dissemblables.

Selon un mode de réalisation alternatif, la matrice des distances D est déterminée en s'inspirant du centroïde spectral défini dans la publication de J.M. Grey et J.W. Gordon, « Perceptual Effects of Spectral Modifications on Musical Timbres », Journal of Acoustic Society of America 63(5) : 1493-1500, 1978 :

$$sc = \frac{\sum_{k=1}^{K_{FFT}-1} kX(k)}{\sum_{k=1}^{K_{FFT}-1} X(k)} ,$$

où sc représente, pour un locuteur donné, une valeur d'énergie,

X(k) est la valeur de la transformée de Fourrier rapide ou FFT (de l'anglais « Fast Fourier Transform ») du signal vocal pour la $k_{\text{ième}}$ composante de Fourier, et

$K_{FFT}$ est la longueur, en nombre des composantes, sur laquelle la transformée de Fourier rapide a été effectuée.

La matrice des distances peut ensuite être obtenue en calculant des différences de valeurs d'énergie pour des locuteurs distincts.

Selon une autre alternative, on peut calculer une matrice des distances D (i, i') en s'inspirant des procédés connus dans le domaine de la reconnaissance automatique de la voix. Pour chaque locuteur, on calcule, sur une portion du signal vocal de ce locuteur, les coefficients cepstraux sur l'échelle Mel ou MFCC (de l'anglais « Mel-frequency Cepstrum Coefficients). On pourra se reporter à la publication de F.Zheng, G.Zhang et Z.Song, « Comparison of différent implementations of MFCC », J. Computer Science and Technology, 16(6) : 582-589, Décembre 2001.

Les coefficients MFCC peuvent être donnés par

$$MFCC_i(j) = \sum_{k=1}^{N_{filt}} \log(X_k(j)) \times \cos(i(k - \frac{1}{2})\frac{\pi}{N_{filt}}$$

Où : i représente l'indice MFCC ; pour une voix donnée, on peut par exemple compter une douzaine de coefficients MFCC décrivant cette voix.

j indice une trame donnée, de 1024 échantillons temporel par exemple.

$X_k(j)$ désigne la $k_{\text{ième}}$ composante de Fourier obtenue par FFT sur les points de la trame j.

$N_{filt}$ désigne le nombre de ces composantes de Fourier.

Selon des procédés connus, les coefficients MFCC peuvent permettre d'estimer la probabilité $P(X|La)$ qu'une observation X provienne d'un locuteur $L_a$. La distance $D_{a,b}$ entre des voix de locuteurs indicés a, b respectivement peut par exemple être estimée selon :

$$D_{a,b} = 1 - (\frac{P(X_b|L_a) + P(X_a|L_b)}{2})$$

Où $X_a$ et $X_b$ désignent des observations obtenues avec le locuteur a et b respectivement.

Pour revenir à la figure 4, une fois la matrice des distances D établie, on détermine pour chaque locuteur une consigne de positionnement. Dans cet exemple, on procède à un ordonnancement des locuteurs lors d'une étape 44. L'ordre des locuteurs est déterminé à partir des distances vocales contenues dans la matrice D. Grâce à un critère de maximisation utilisé dans l'espace des distances vocales, on obtient un ensemble ordonné $L = \{L_i\}_{i \neq i_0}$ qui permet de savoir quel locuteur est à placer à coté de tel autre dans l'espace virtuel.

Par exemple, on peut chercher à maximiser la somme des distances entre locuteurs voisins. Cette somme des distances est calculée pour chaque ordonnancement envisagé, et on choisit l'ordonnancement pour lequel cette somme est maximale.

On effectue ensuite une étape 45 de d'affectation de position au locuteur. Par exemple, si à un locuteur i correspond un ordre j, on peut prévoir d'affecter à ce locuteur une position dans le demi-plan frontal, formant avec la position du locuteur le plus à droite un angle de $(j-1)\frac{\pi}{N-1}$ , où N est le nombre total de conférenciers. Une telle fonction de correspondance entre ordre des locuteurs et positions des locuteurs dans l'espace virtuel est relativement simple. Il est bien sûr possible de choisir des fonctions plus subtiles qui prennent en compte la résolution spatiale de l'oreille humaine. Ainsi, l'oreille discrimine mieux les locuteurs en face de l'auditeur que les locuteurs positionnés latéralement.

De plus, on s'est ici restreint à un espace 2D, mais il est évidemment possible de généraliser à l'espace 3D. On peut en outre tenir compte de notions comme la distance ou l'éloignement à l'auditeur.

Si la fonction de correspondance entre ordre des locuteurs et positions des locuteurs est fixée, on peut assimiler l'étape d'ordonnancement des locuteurs à la détermination d'une consigne de positionnement.

Alternativement, la détermination d'une consigne de positionnement peut comprendre les étapes d'ordonnancement 44 et d'affectation de position 45.

Enfin, lors d'une étape 46, les flux reçus de chaque locuteur sont spatialisés en appliquant les consignes correspondantes, afin que l'auditeur ressente le son correspondant comme ayant été émis par une source virtuelle à la position ainsi déterminée.

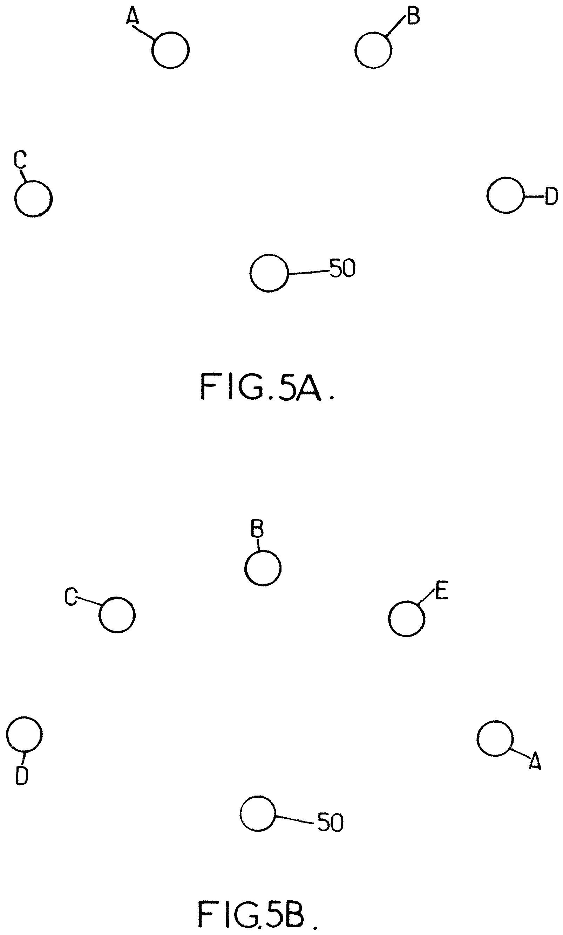

Les locuteurs peuvent être ordonnés suivant un modèle circulaire ou semi-circulaire, comme représenté sur les figures 5A à 5D. L'avantage du modèle circulaire est qu'il ne présente pas de cas particulier et qu'il est adapté à une représentation circulaire de l'espace virtuel audio 3D. Avec un modèle linéaire il existe des cas particuliers aux extrémités, mais ce modèle est particulièrement bien adapté à une représentation linéaire ou semi-circulaire de l'espace virtuel audio 3D.

La figure 5A illustre schématiquement un exemple de configuration de base des locuteurs dans l'espace virtuel. Les locuteurs A, B, C et D sont placés dans l'espace virtuel de l'auditeur 50.

Il peut être envisagé que de nouveaux conférenciers intègrent la conférence, ou au contraire que certains conférenciers se retirent de la conférence. En cas de retrait, on peut par exemple laisser les positions virtuelles des autres conférenciers inchangées, ou bien modifier ces positions, éventuellement en utilisant la matrice des distances.

Pour un nombre N de locuteurs faisant déjà parti de la conférence, l'arrivée du nouveau locuteur entraine l'estimation d'un nouvel ensemble ordonné L. Soit T l'ensemble des permutations possibles de L, et $\zeta_m$ une permutation donné de L :

$T = \{\zeta_m\}_{m \in C}$, où C est l'ensemble des permutations possibles de L.

Il est possible de prévoir plusieurs modes de positionnement lors d'une arrivée d'un nouveau conférencier. Par exemple, en mode dynamique, l'arrivée d'un nouveau locuteur E entraine une nouvelle estimation de la matrice des distances, un nouvel ordonnancement et une nouvelle affectation de position pour chacun des locuteurs. L'ensemble C comporte donc N! permutations.

Comme le montre la figure 5B, les positions virtuelles des locuteurs peuvent varier considérablement du fait de l'arrivée d'un nouveau locuteur, mais le positionnement est optimal au sens des distances vocales.

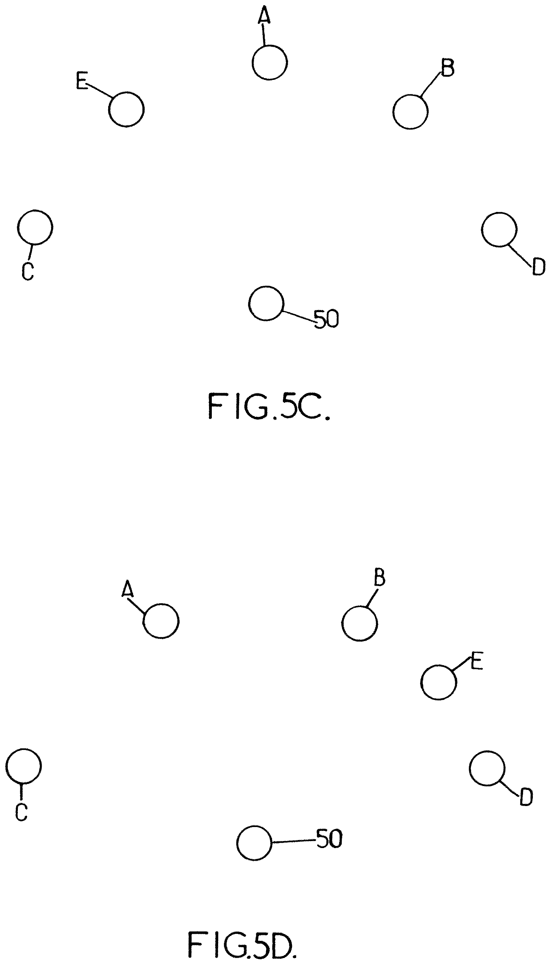

En mode statique, seul le nouveau locuteur E se voit positionné à partir de caractéristiques de la voix, et les positions des locuteurs déjà présents sont légèrement modifiées afin de faciliter l'insertion du nouveau locuteur dans l'espace virtuel, comme représenté sur la figure 5C.

En mode position figées, les positions des locuteurs déjà présents restent inchangées, comme représenté sur la figure 5D.

En modes statique et positions figées, l'ensemble C comporte (N-1) permutations possibles.

Pour chaque permutation, on utilise une variable de décision $M_m$ permettant d'évaluer la pertinence d'une permutation m. Par exemple, la variable de décision $M_m$ est estimée en sommant les distances entre locuteurs voisins. On détermine ainsi la permutation maximisant la variable de décision $M_m$, et donc le nouvel ordonnancement.

Par exemple, pour une conférence à cinq participants, et pour un auditeur donné parmi ces participants, les quatre participants restants, dits locuteurs $L_1$, $L_2$, $L_3$, $L_4$, peuvent par exemple être ordonnés suivant $\{L_1, L_2, L_3, L_4\}$. Suite à l'arrivée d'un nouveau conférencier $L_5$, et dans le cas d'un mode dynamique, on commence par placer arbitrairement ce nouveau conférencier au rang le plus élevé, c'est-à-dire que l'ensemble L est à présent $\{L_1, L_2, L_3, L_4, L_5\}$. Si on détermine que $\zeta_{m0}$, définie comme suit

$\zeta_{m0}(L_1)=L_2$, $\zeta_{m0}(L_2)=L_4$, $\zeta_{m0}(L3)=L_1$, $\zeta_{m0}(L_4)=L_5$ et $\zeta_{m0}(L_5)=L_3$,

est la permutation la plus adéquate, on obtient le nouvel ensemble ordonné $\{L_2, L_4, L_1, L_5, L_3\}$.

Dans le cas d'un mode statique, le nouveau participant peut être inséré soit entre deux autres locuteurs déjà positionnés, soit à une extrémité de l'ensemble ordonné. Un critère de maximisation des distances vocales est utilisé pour tester quelle position d'insertion est la meilleure. Pour chaque possibilité d'insertion, on cherche à estimer une valeur caractéristique de cette insertion.

L'invention n'est pas limitée à une variable de décision égale à la somme des distances entre voisins. Par exemple, I, I+1 et X étant les indices respectifs de deux locuteurs consécutifs et du nouveau locuteur, la variable de décision $M_I$ indique la pertinence d'une insertion virtuelle du locuteur X entre les locuteurs I et I+1:

$$M = \frac{\mu}{1 + \sigma} \quad ,$$

Où $\mu$ est une moyenne des distances donné par

$$\mu = \frac{D_{I,X} + D_{I+1,X}}{2D_{I,I+1}}$$

Et

$$\sigma = \sqrt{(\frac{D_{l,X}}{D_{l,l+1}} - \mu)^2 + (\frac{D_{l+1,X}}{D_{l,l+1}} - \mu)^2}$$

Le choix de normaliser $\mu$ par la distance vocale $D_{l,l+1}$ entre les locuteur l et l+1 permet de privilégier l'insertion du nouveau locuteur X entre deux locuteurs voisins dans l'espace de représentation virtuelle audio 3D relativement proches au sens de la distance vocale. La normalisation de la moyenne par un écart-type standard peut conduire à privilégier l'insertion d'un nouveau locuteur distant de manière équitable des locuteurs l, l+1.

On choisit d'affecter au nouveau participant le rang qui maximise la valeur de la variable de décision.

En appliquant les formules de $\mu$ et $\sigma$ ci-dessus aux cas des extrémités, on remarque que $\mu=1$ et $\sigma=0$. La formule choisie pour estimer M permet d'éviter le cas M indéfini. Dans le cas d'un positionnement en cercle autour de l'auditeur, pourra simplifier la formule de M en $M = \dfrac{\mu}{\sigma}$, puisqu'on évite ainsi les cas spécifiques aux extrémités.

Les principes énoncés ci-dessus peuvent être intégrés dans un dispositif, par exemple un pont ou un terminal.

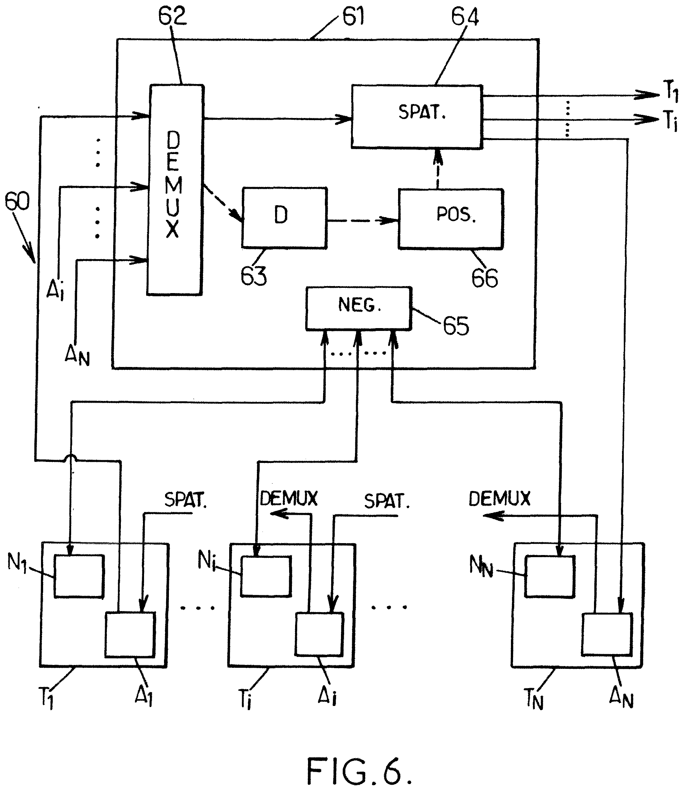

La figure 6 montre de façon plus détaillée un exemple de système selon un mode de réalisation de l'invention. Ce système 60 comprend un pont 61 capable de communiquer avec des terminaux $T_1,..., T_i,...T_N$. Bien entendu, on peut prévoir que le pont soit capable de gérer plusieurs conférences à plusieurs participants en parallèle.

Le pont 61 peut être vu comme une entité composée de plusieurs modules 62, 63, 64, 65, 66. Sur la figure 6, les flèches en pointillés représentent les transmissions effectuées entre ces modules à des fins de positionnement des locuteurs. Ces transmissions peuvent par exemple être effectuées en début de conférence, suite à l'arrivée d'un nouveau participant, et/ou à intervalles réguliers.

Chaque terminal $T_1,..., T_i,..., T_N$ transmet au pont 60 un signal correspondant à un flux audio, et reçoit du pont 60 des signaux correspondants à des flux audio spatialisés en provenance des autres terminaux.

Un module de négociation 66 du pont 60 permet d'échanger les messages de signalisation avec les terminaux $T_1,..., T_i,..., T_N$, via leur modules $N_1,..., N_i,..., N_N$ de négociation respectifs. Ce module 66 permet de créer des conférences, de négocier avec les terminaux $T_1,..., T_i,..., T_N$ et de donner à chaque terminal $T_i,..., T_i,..., T_N$ un identifiant.

Un bloc démultiplexeur 62 permet d'envoyer le signal correspondant aux premières secondes de parole d'un participant vers un bloc 63 de mise à jour de la matrice de distances. Eventuellement, le bloc 62 peut envoyer ce signal en parallèle vers un bloc de spatialisation 64.

Le bloc 63 de mise à jour de la matrice de distances permet de mesurer l'écart entre deux voix et donne un indice de dissemblance entre celles-ci. Le bloc 63 reçoit du bloc 62 le signal correspondant à quelques secondes de voix d'un participant, extrait de ce signal des paramètres d'identification vocale et met à jour une matrice de distance vocale D.

Un bloc de 66 de positionnement des locuteurs par maximisation de distances fournit au bloc 64 de spatialisation les consignes de positionnement de tous les locuteurs distants et cela pour chaque auditeur. Le bloc 66 reçoit du bloc 63 la matrice de distance vocale et établit les consignes de positionnement pour chaque participant puisque deux auditeurs n'ont pas la même scène sonore, n'ayant pas les mêmes locuteurs distants.

Le bloc de 64 de spatialisation spatialise les flux audio issus de chaque participant pour générer autant de scènes sonores qu'il y a de participants. La spatialisation se base sur les consignes qu'elle reçoit du bloc 66 de positionnement des locuteurs par maximisation de distances.

Il est à noter que ce schéma est simplifié et que par exemple des blocs d'encodage/décodage pourraient être rajoutés si on souhaite compresser les données audio mono ou spatialisées.

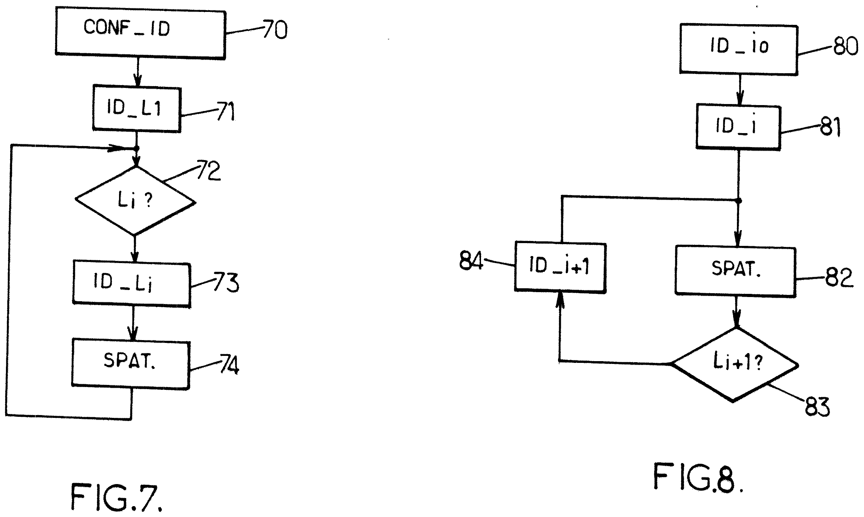

La figure 7 est un exemple d'algorithme destiné à être exécuté par le pont 61. A l'arrivée d'un premier participant, le bloc de négociation 65 sur la figure 6 crée la conférence et obtient un identifiant de conférence (étape 70). Suite à quelques mots prononcés par l'unique participant à la conférence, le flux audio issu du terminal et correspondant à ces quelques mots sert à l'enregistrement des paramètres d'identification de ce participant, lors d'une étape 71.

Le pont se place ensuite dans un mode d'attente, représenté par le test 72, de l'arrivée ou de départ de participants pour cette conférence.

Lors qu'un nouveau participant arrive à la conférence, le flux audio issu du terminal correspondant à ce nouveau participant est reçu. Dans un premier temps, ce flux sert à l'enregistrement des paramètres d'identification suite à quelques mots prononcés dans ou hors de la conférence, lors d'une étape 73.

Dans un second temps, le flux audio est envoyé vers le bloc de spatialisation et la matrice des distances est mise à jour. La nouvelle matrice des distances est utilisée pour générer des consignes de positionnement intégrant le nouveau participant. En mode dynamique, l'ordre des autres locuteurs peut être changé, contrairement à en mode statique. Pour chaque participant, on a donc une consigne de positionnement, dite également vecteur de positionnement, qui commande le bloc de spatialisation (référence 64 sur la figure 6).

Le bloc de spatialisation envoie à chaque participant les flux audio spatialisés basés sur leur vecteur de positionnement respectif.

Ces étapes de mise à jour de la matrice, de positionnement et de spatialisation, déjà détaillés à la figure 4, sont référencées 74 sur la figure 7.

Dans le cas (non envisagé sur la figure 7) de départ, le flux audio du participant correspondant n'est plus envoyé sur le pont. Sur la matrice des distances, la ligne et la colonne correspondant à ce participant sont supprimées, ainsi que le vecteur de positionnement correspondant à ce participant. Les participants restants peuvent être repositionnés, en particulier en mode dynamique.

On peut prévoir des étapes de test non représentées pour comparer le nombre de participants à zéro. Si le nombre de participants, est égal à zéro, la conférence peut être close. Sinon, le pont se replace dans l'état d'attente d'arrivée ou de départ de participant.

Le traitement effectué par le pont est transparent pour les terminaux. Chaque terminal se contente de négocier avec le pont un flux montant vers le pont et un flux audio spatialisé descendant, en dialoguant par l'intermédiaire d'un protocole de signalisation de VoIP.

Le fait de prononcer quelques mots hors conférence peut permettre d'éviter d'attendre que le participant parle pendant la conférence pour le positionner. Cependant, on peut prévoir de positionner un locuteur silencieux de façon arbitraire, et d'attendre les premiers mots de ce locuteur pour effectuer les étapes de positionnement et de spatialisation. La position virtuelle du locuteur pourrait être modifiée de manière progressive, ou bien instantanée.

La figure 8 est un exemple d'algorithme destiné à être exécuté par un terminal dans un système selon un mode de réalisation de l'invention. Dans ce mode de réalisation, le positionnement des locuteurs en conférence avec un auditeur donné est effectué dans le terminal de cet auditeur. Le terminal utilise les premières secondes de parole de chaque participant pour le positionner virtuellement.

Lors d'une étape 80, le bloc de négociation du terminal du participant $i_0$ crée la conférence et donne un identifiant au participant $i_0$. Puis, lors d'une étape 81, des identifiants sont obtenus pour les éventuels autres participants déjà présents à la conférence. L'étape référencée 82 représente les étapes d'estimation de la matrice des distances, d'ordonnancement, de positionnement et de spatialisation décrites plus haut.

Le terminal reçoit ainsi des flux audio, qu'il spatialise en fonction de l'émetteur de ces flux audio. Le terminal envoie en outre des flux audio aux autres terminaux.

Une partie du terminal passe ensuite dans un état d'attente d'arrivée ou de départ de participant, représenté ici par le test 83.

En cas d'arrivée d'un nouveau participant, un identifiant est obtenu pour ce nouveau participant lors d'une étape 84. Puis les étapes d'estimation de la matrice des distances, d'ordonnancement, de positionnement et de spatialisation sont effectuées à nouveau, par exemple pour l'ensemble des participants (mode dynamique).

Dans le cas (non envisagé sur la figure 8) de départ d'un participant, le terminal arrête d'envoyer des flux audio à destination de ce participant. La matrice des distances est diminuée de la ligne et de la colonne correspondant à ce participant. Le vecteur de positionnement correspondant à ce participant est supprimé et les participants restants sont éventuellement repositionnés.

Alternativement, on peut prévoir que chaque participant communique aux autres ses paramètres d'identification vocale par exemple dans le corps d'un message de protocole de signalisation, comme SIP par exemple. Cela permet d'éviter à chaque participant tout le processus de calcul des paramètres d'identification et ainsi diminuer le temps de calcul.

L'invention peut être mise en oeuvre quelle que soit la largeur de bande ou la qualité. On peut imaginer qu'une voix relativement bruitée soit spatialisée de façon isolée par rapport aux autres voix. L'énergie du bruit ambiant en absence de parole de la part du locuteur peut être extraite afin d'influer ainsi sur la position virtuelle du locuteur.

## Revendications

**1.** Procédé mis en oeuvre par des moyens informatiques, de conférence audio entre des conférenciers via leur terminal respectif, les conférenciers incluant au moins un auditeur et au moins un locuteur, le procédé comprenant, pour au moins ledit auditeur et pour au moins ledit locuteur :

(a) estimer, à partir d'un signal audio de parole du locuteur reçu d'un terminal du locuteur, au moins une caractéristique de la voix dudit locuteur (42), et
(b) déterminer une consigne de positionnement du locuteur dans un espace virtuel de l'auditeur (44, 45), en fonction de ladite au moins une caractéristique estimée de la voix du locuteur

**2.** Procédé de conférence audio selon la revendication 1, dans lequel il existe plusieurs locuteurs, et dans lequel les étapes (a) et (b) sont effectuées pour au moins deux locuteurs, et

pour chacun desdits au moins deux locuteurs, l'étape (b) de détermination de la consigne de positionnement dudit locuteur est effectuée en outre à partir d'au moins une caractéristique estimée de la voix à l'étape (a) pour au moins un autre locuteur parmi lesdits au moins deux locuteurs.

**3.** Procédé de conférence audio selon l'une des revendications 1 à 2, comprenant en outre une étape de spatialisation virtuelle du locuteur dans l'espace virtuel de l'auditeur, en utilisant la consigne de positionnement pour ledit locuteur (46).

**4.** Procédé selon l'une des revendications 2 à 3, comprenant les étapes consistant à
à partir des caractéristiques estimées de la voix à l'étape (a) pour au moins deux locuteurs, estimer (43) au moins une distance vocale entre lesdits locuteurs (43), et
utiliser ladite au moins une distance vocale estimée pour déterminer les consignes de positionnement desdits au moins deux locuteurs (44, 45).

**5.** Procédé selon la revendication 4, dans lequel les étapes (a) et (b) sont effectuées pour au moins 3 locuteurs, lors de l'étape (b), on ordonne les locuteurs de façon à maximiser la somme des distances vocales entre locuteurs voisins.

**6.** Procédé de conférence audio selon l'une des revendications 1 à 5,
dans lequel, suite à l'arrivée d'un nouveau locuteur, on effectue pour chacun des locuteurs l'étape (b) de détermination de la consigne de positionnement, en fonction de la caractéristique estimée de la voix pour ledit locuteur et d'au moins une caractéristique estimée de la voix pour au moins un autre locuteur présent à la conférence.

**7.** Procédé de conférence audio selon l'une des revendications 1 à 5, dans lequel, suite à l'arrivée d'un nouveau locuteur, on effectue l'étape (b) pour le nouveau locuteur seulement, et
on modifie les consignes de positionnement des locuteurs autres que le nouveau locuteur afin de tenir compte des consignes de positionnement du nouveau locuteur.

**8.** Procédé de conférence audio selon l'une des revendications 1 à 5, dans lequel, suite à l'arrivée d'un nouveau locuteur, on effectue l'étape (b) pour le nouveau locuteur seulement, les consignes de positionnement des locuteurs autres que le nouveau locuteur restant inchangées.

**9.** Dispositif (1) destiné à être utilisé dans le cadre d'une conférence audio entre des conférenciers via leur terminal respectif (2, 3, 4, 5), les conférenciers incluant au moins un auditeur et au moins un locuteur, le dispositif comprenant pour au moins ledit locuteur et au moins ledit auditeur, une entrée (200) pour recevoir un signal audio de parole du locuteur reçu
d'un terminal du locuteur,
des moyens de traitement (6) pour :

- estimer, en fonction du signal audio de parole du locuteur reçu, au moins une caractéristique de la voix du locuteur,
- et déterminer une consigne de positionnement du locuteur dans un espace virtuel de l'auditeur en fonction de ladite au moins une caractéristique estimée de la voix du locuteur, et

une sortie (100) pour délivrer la consigne de positionnement du locuteur.

**10.** Programme d'ordinateur destiné à être stocké dans une mémoire d'un dispositif destiné à être utilisé dans le cadre d'une conférence audio entre des conférenciers via leur terminal respectif, et/ou stocké sur un support mémoire destiné à coopérer avec un lecteur dudit dispositif et/ou téléchargé via un réseau de télécommunication, les conférenciers incluant au moins un auditeur et au moins un locuteur, le programme comprenant des instructions pour exécuter les étapes consistant à, pour au moins ledit locuteur et au moins ledit auditeur, estimer, en fonction d'un signal audio de parole reçu d'un terminal du locuteur, au moins une caractéristique de la voix dudit locuteur, et déterminer en fonction de la caractéristique de la voix du locuteur une consigne de positionnement dudit locuteur dans un espace virtuel de l'auditeur.

**Patentansprüche**

1. Von Datenverarbeitungsmitteln umgesetztes Audiokonferenzverfahren zwischen Konferenzteilnehmern über ihr jeweiliges Endgerät, wobei die Konferenzteilnehmer mindestens einen Zuhörer und mindestens einen Sprecher beinhalten, wobei das Verfahren für mindestens den Zuhörer und mindestens den Sprecher Folgendes umfasst:

   (a) Schätzen mindestens eines Merkmals der Stimme des Sprechers (42) ausgehend von einem Sprachaudiosignal des Sprechers, das von einem Endgerät des Zuhörers empfangen wird, und
   (b) Bestimmen eines Positionierungssollwerts des Sprechers in einem virtuellen Raum des Zuhörers (44, 45) in Abhängigkeit von dem mindestens einen geschätzten Merkmal der Stimme des Sprechers.

2. Audiokonferenzverfahren nach Anspruch 1, bei dem es mehrere Sprecher gibt und bei dem
   die Schritte (a) und (b) für mindestens zwei Sprecher durchgeführt werden und für jeden der mindestens zwei Sprecher der Schritt (b) des Bestimmens des Positionierungssollwerts des Sprechers darüber hinaus ausgehend von mindestens einem im Schritt (a) geschätzten Merkmal der Stimme für mindestens einen weiteren Sprecher unter den mindestens zwei Sprechern durchgeführt wird.

3. Audiokonferenzverfahren nach einem der Ansprüche 1 bis 2, umfassend ferner einen Schritt der virtuellen Verräumlichung des Sprechers in dem virtuellen Raum des Zuhörers unter Verwendung des Positionierungssollwerts für den Sprecher (46).

4. Verfahren nach einem der Ansprüche 2 bis 3, umfassend die Schritte, die darin bestehen,
   ausgehend von den im Schritt (a) geschätzten Merkmalen der Stimme für mindestens zwei Sprecher mindestens eine Sprechdistanz zwischen den Sprechern (43) zu schätzen (43) und
   die mindestens eine geschätzte Sprechdistanz zu verwenden, um die Positionierungssollwerte der mindestens zwei Sprecher (44, 45) zu bestimmen.

5. Verfahren nach Anspruch 4, bei dem die Schritte (a) und (b) für mindestens 3 Sprecher durchgeführt werden, beim Schritt (b) die Sprecher so geordnet werden, dass die Summe der Sprechdistanzen zwischen benachbarten Sprechern maximiert wird.

6. Audiokonferenzverfahren nach einem der Ansprüche 1 bis 5, bei dem nach dem Hinzukommen eines neuen Sprechers für jeden der Sprecher der Schritt (b) des Bestimmens des Positionierungssollwerts in Abhängigkeit von dem geschätzten Merkmal der Stimme für den Sprecher und von mindestens einem geschätzten Merkmal der Stimme für mindestens einen anderen bei der Konferenz anwesenden Sprecher durchgeführt wird.

7. Audiokonferenzverfahren nach einem der Ansprüche 1 bis 5, bei dem nach dem Hinzukommen eines neuen Sprechers
   der Schritt (b) nur für den neuen Sprecher durchgeführt wird und
   die Positionierungssollwerte der Sprecher außer dem neuen Sprecher geändert werden, um die Positionierungssollwerte des neuen Sprechers zu berücksichtigen.

8. Audiokonferenzverfahren nach einem der Ansprüche 1 bis 5, bei dem nach dem Hinzukommen eines neuen Sprechers
   der Schritt (b) nur für den neuen Sprecher durchgeführt wird und die Positionierungssollwerte der Sprecher außer dem neuen Sprecher unverändert bleiben.

9. Vorrichtung (1), die dazu bestimmt ist, im Rahmen einer Audiokonferenz zwischen Konferenzteilnehmern über ihr jeweiliges Endgerät (2, 3, 4, 5) verwendet zu werden, wobei die Konferenzteilnehmer mindestens einen Zuhörer und mindestens einen Sprecher beinhalten, wobei die Vorrichtung für mindestens den Sprecher und mindestens den Zuhörer umfasst:

   einen Eingang (200), um ein von einem Endgerät des Sprechers empfangenes Sprachaudiosignal des Sprechers zu empfangen,
   Verarbeitungsmittel (6), um

      - in Abhängigkeit vom empfangenen Sprachaudiosignal des Sprechers mindestens ein Merkmal der Stimme des Sprechers zu schätzen

- und einen Positionierungssollwert des Sprechers in einem virtuellen Raum des Zuhörers in Abhängigkeit von dem mindestens einen geschätzten Merkmal der Stimme des Sprechers zu bestimmen und

einen Ausgang (100) zum Ausgeben des Positionierungssollwerts des Sprechers.

10. Computerprogramm, das dazu bestimmt ist, in einem Speicher einer Vorrichtung gespeichert zu werden, die dazu bestimmt ist, im Rahmen einer Audiokonferenz zwischen Konferenzteilnehmern über ihr jeweiliges Endgerät verwendet zu werden, und/oder auf einem Speichermedium gespeichert zu werden, das dazu bestimmt ist, mit einem Lesegerät der Vorrichtung zusammenzuwirken, und/oder über ein Telekommunikationsnetz heruntergeladen zu werden, wobei die Konferenzteilnehmer mindestens einen Zuhörer und mindestens einen Sprecher beinhalten, wobei das Programm Anweisungen zum Ausführen der Schritte umfasst, die darin bestehen, für mindestens den Sprecher und mindestens den Zuhörer in Abhängigkeit von dem von einem Endgerät des Sprechers empfangenen Sprachaudiosignal mindestens ein Merkmal der Stimme des Sprechers zu schätzen und in Abhängigkeit von dem Merkmal der Stimme des Sprechers einen Positionierungssollwert des Sprechers in einem virtuellen Raum des Zuhörers zu bestimmen.

**Claims**

1. Method, implemented by electronic data processing means, for audio conferencing between conference participants via their respective terminals, the participants including at least one listener and at least one speaker, the method comprising, for at least the said listener and for at least the said speaker:

   (a) estimating, using a speech audio signal of the speaker received from a terminal of the speaker, at least one characteristic of the voice of the said speaker (42), and
   (b) determining a setpoint for positioning the speaker in a virtual space of the listener (44, 45) as a function of the said at least one estimated characteristic of the voice of the speaker.

2. Audio conference method according to Claim 1, in which there exist several speakers, and in which the steps (a) and (b) are carried out for at least two speakers, and
   for each of the said at least two speakers, the step (b) for determining the positioning setpoint for the said speaker is also carried out using at least one characteristic of the voice estimated in the step (a) for at least one other speaker from amongst the said at least two speakers.

3. Audio conference method according to either of Claims 1 and 2, also comprising a step for the virtual spatialization of the speaker within the virtual space of the listener, using the positioning setpoint for the said speaker (46).

4. Method according to either of Claims 2 and 3, comprising the steps consisting in
   starting from the characteristics of the voice estimated in the step (a) for at least two speakers, estimating (43) at least one vocal distance between the said speakers (43), and
   using the said at least one estimated vocal distance to determine the positioning setpoints for the said at least two speakers (44, 45).

5. Method according to Claim 4, in which
   the steps (a) and (b) are carried out for at least 3 speakers,
   during the step (b), the speakers are ordered in such a manner as to maximize the sum of the vocal distances between neighbouring speakers.

6. Audio conference method according to any one of Claims 1 to 5,
   in which, following the arrival of a new speaker, for each of the speakers, the step (b) is carried out for determining the positioning setpoint, as a function of the characteristic of the voice estimated for the said speaker and from at least one characteristic of the voice estimated for at least one other speaker present at the conference.

7. Audio conference method according to one of Claims 1 to 5, in which, following the arrival of a new speaker,
   the step (b) is carried out only for the new speaker, and
   the positioning setpoints are modified for the speakers other than the new speaker in order to take the positioning setpoints of the new speaker into account.

8. Audio conference method according to one of Claims 1 to 5, in which, following the arrival of a new speaker, the step (b) is carried out only for the new speaker, the positioning setpoints for the speakers other than the new speaker remaining unchanged.

9. Device (1) designed to be used within the framework of an audio conference between conference participants via their respective terminals (2, 3, 4, 5), the participants including at least one listener and at least one speaker, the device comprising, for at least the said speaker and at least the said listener, an input (200) for receiving a speech audio signal of the speaker received from a terminal of the speaker, processing means (6) for:

   - estimating, as a function of the speech audio signal of the speaker received, at least one characteristic of the voice of the speaker,
   - and determining a setpoint for positioning the speaker within a virtual space of the listener as a function of the said at least one estimated characteristic of the voice of the speaker, and

   an output (100) for delivering the positioning setpoint for the speaker.

10. Computer programme designed to be stored in a memory of a device designed to be used within the framework of an audio conference between conference participants via their respective terminals, and/or stored on a storage medium designed to cooperate with a reader of the said device and/or downloaded via a telecommunications network, the participants including at least one listener and at least one speaker, the programme comprising instructions for executing the steps consisting in, for at least the said speaker and at least the said listener, estimating, as a function of a speech audio signal received from a speaker's terminal, at least one characteristic of the voice of the said speaker, and determining, as a function of the characteristic of the voice of the speaker, a setpoint for positioning of the said speaker within a virtual space of the listener.

FIG.1.

FIG.2.

FIG.3.

REPT. $V_i(t), i \neq io$ —41

COEFFENERGY$^{(i)}$(k) —42

D —43

$\{L_i\}_{i \neq io}$ —44

POSITION. —45

SPAT. —46

# FIG.4.

FIG.5A.

FIG.5B.

FIG.5C.

FIG.5D.

FIG.6.

FIG.7.

FIG.8.

EP 2 009 892 B1

## RÉFÉRENCES CITÉES DANS LA DESCRIPTION

**Documents brevets cités dans la description**

- WO 07006856 A
- EP 1515570 A

**Littérature non-brevet citée dans la description**

- **H.FLETCHER.** Auditory Pattern. *Review of Modem Physics,* Janvier 1940, vol. 12, 47-65
- **J.M. GREY ; J.W. GORDON.** Perceptual Effects of Spectral Modifications on Musical Timbres. *Journal of Acoustic Society of America,* 1978, vol. 63 (5), 1493-1500
- **F.ZHENG ; G.ZHANG ; Z.SONG.** Comparison of différent implementations of MFCC. *J. Computer Science and Technology,* Décembre 2001, vol. 16 (6), 582-589